## Europäisches Patentamt
## European Patent Office
## Office européen des brevets

(19)

(11) Publication number: **0 006 082**
**B1**

(12) # EUROPEAN PATENT SPECIFICATION

(45) Date of publication of patent specification: **10.09.86**

(51) Int. Cl.⁴: **F 16 H 25/24**

(21) Application number: **79850054.2**

(22) Date of filing: **05.06.79**

(54) **Apparatus for translating rotary movement to rectilinear movement.**

(30) Priority: **05.06.78 SE 7806574**

(43) Date of publication of application:
**12.12.79 Bulletin 79/25**

(45) Publication of the grant of the patent:
**10.09.86 Bulletin 86/37**

(84) Designated Contracting States:
**BE CH DE FR GB IT LU NL**

(56) References cited:
**DE-A-1 650 834**
**DE-A-1 949 049**
**GB-A-1 084 628**
**US-A-3 128 634**
**US-A-3 861 226**

(73) Proprietor: **STK Svenskt Tillväxtkapital AB**
**Kungsgatan 5**
**S-111 43 Stockholm (SE)**

(72) Inventor: **Andersson, Per**
**Lindetofta L4**
**S-53190 Lidköping (SE)**

(74) Representative: **Lindblad, Sture**
**FAMTEC Box 7574**
**S-103 93 Stockholm (SE)**

Courier Press, Leamington Spa, England.

## Description

The present invention relates to an apparatus for translating rotary movement to rectilinear movement, using members with helical grooves or threads and profiled roller bodies in cooperation.

Prior art apparatuses are known from e.g. US—A—3.128.634 and US—A—3.861.226, GB—A—1.084.628 and DE—A—1.949.049. Prior art apparatuses also include ball-nuts and screws which apparently at present are the most common ones on the market. Indeed, these show only little friction but they have the disadvantage that the gear reduction is small, i.e. there is a large displacement for each revolution of the rotary movement.

Of the known prior art, the device shown in DE—A—1.949.049, see especially Fig. 34 thereof, is the one closest to the present invention. The device shown therein is an actuator device having one single cam of the rollers, meaning a radially deep contact area and long frictional sliding movement between the roller and the screw, partly due to the great eccentricity at hand.

The drawbacks of the device known from DE—A—1.949.049 are removed by the present invention as expressed in the claims. The present invention includes a roller unit with multiple non-pitch flanges or "thread profiles" engaging multiple shallow threads which gives rise to multiple crescent-shaped contact areas forming a total large contact area having a great sector angle for the crescent areas. This means a maximum, not surpassable accuracy and stiffness of construction.

Also such drawbacks as the fact that the roller are carried by long shafts mostly of cantilever type, long weak brackets or flanges which results in a construction of resilient character which may not be accepted at e.g. modern machine tools having great advancing forces at the cutting operation of the rotating tool are removed. In contrast thereto, the present invention shows a rigid mounting of the rollers to the driving shaft by the aid of eccentric sleeves.

A further drawback of the known devices is the fact that they are rather complex, have a low load-carrying capacity and a rather high gear friction.

The apparatus in accordance with the present invention is a great advance within this technical field. Thereby is obtained an apparatus showing low friction, being of a simple, reliable and cheap structure, and having good efficiency in combination with a high gear reduction.

The apparatus in accordance with the present invention in which the above drawbacks are removed is a screw actuating mechanism adapted to provide a linear output movement in response to a rotary input movement, and comprises a drive shaft rotatable in relation to and fixed against axial movement to a surrounding structure, an assembly of roller bodies carried by the drive shaft, each roller body being rotatable about an axis parallel to the drive shaft. The surrounding structure is constituted by an elongated cylinder having an internal thread drivingly engaged with and concentric to the roller body assembly and movable axially in relation to the roller body assembly in response to rotary movement of the roller body assembly. The roller bodies are axially spaced along the length of the drive shaft. The novel feature of the mechanism of the invention resides in the facts that each roller body has multiple peripheral outwardly extending annular ridges, in that the multiple annular ridges extend in planes oriented at right angles to the axis of rotation of the roller body, and in that the outer diameter of the multiple annular ridges is only slightly smaller than the inner diameter of the threads of the elongate cylinder.

In one embodiment the roller bodies are eccentrically journalled on the drive shaft. The sleeves have a hole to accommodate the drive shaft whereas the drive shaft being cylindrical at least over the total axial length of the roller body assembly.

In another embodiment the outer structure comprises an outer cylinder which is concentric to the elongate cylinder and enclosing same. The drive shaft is rotatable in relation to the outer cylinder but fixed against axial movement.

The invention will now be closer described in the following with reference to the accompanying drawing in which

Fig. 1 is a longitudinal cross sectional view of a unit of the type to which the invention refers,

Fig. 2 is a broken and partially sectional view of a preferred roller assembly in accordance with the invention,

Fig. 3 is a cross sectional view taken along line III—III in Fig. 2 showing three roller bodies, and

Fig. 4 shows a preferred embodiment of a roller body.

Further advantages are obtained if the eccentric journal consists of an eccentric sleeve rigidly and undistortably attached to the drive shaft, and having a hole for accommodating the drive shaft, eccentrically disposed in relation to the journalling surface.

It is also advantageous to make the profiled roller body as a roller bearing, the outer surface of its outer ring having complementary ridges coacting and engaging with the helix groove.

It is even advantageous to make the apparatus so that the outer ring of the roller bearing carries a separate sleeve, the outer periphery of which has the complementary ridges, or that the driving means comprises several profiled roller bodies evenly distributed around the centre line of the drive shaft.

Other valuable advantages are obtained by the profiled roller bodies being arranged for axial and radial adjustment on the eccentric journals, for the purpose of allowing said bodies to be tightened against each other for eliminating axial play between said bodies of the driving system and the helical groove or thread of the inner cylinder.

The apparatus according to the invention consists of three main parts, an outer cylinder 1, an inner cylinder 10 and a driving unit 20.

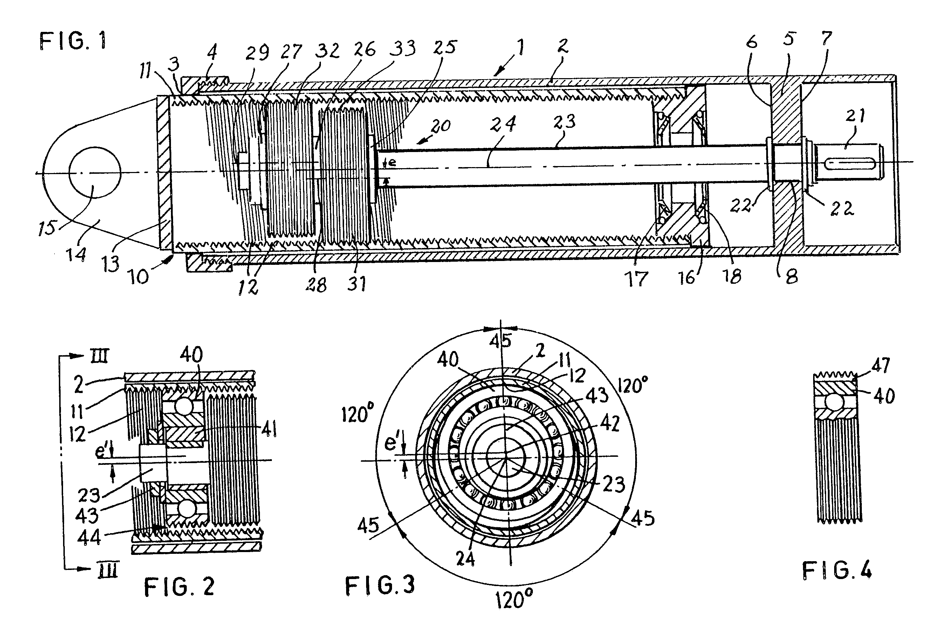

From Figure 1 it is apparent that the outer cylinder 1 consists of an outer casing or tube 2 with an opening 3 at one end. The opening 3, either in an end piece 4 or in the tube itself, is not formed circularly. The inner tube 11 is glidably but nonrotatably taken through the opening 3. This can be achieved by the opening being formed as a polygon, by the outer surface of the inner casing being provided with a key way in the end wall piece 4, or in some other known mode. The outer casing 2 has, at its other end portion, a transverse portion 5 with front and back axially facing surfaces 6 and 7 and a centrally displaced cylindrical bearing surface 8.

At its rear end, the inner tube 11 has a sliding bushing 16. Sliding surfaces can alternatively be formed on the inner tube 11 itself. Conical disk springs 17, 18 can be mounted on the sliding bushing to function, as buffers for the end positions of the inner cylinder. At the innermost position, the buffer 18 will come into contact with the transverse portion 5 and at the outmost position the buffer 17 will come into contact with an eccentric plate 25, described in detail below.

The inner casing 11 has at its outer end a transverse portion 13 to which are attached two lugs 14 each with holes 15 therethrough. The drive member, e.g. a lever or arm, can be connected to the hole 15 by means of a pin (not shown).

The driving unit or driving system 20 comprises a drive shaft 23, rotatably mounted in the transverse portion 5 of the outer casing 2. A washer 22 bears against each surface 6 and 7 of said transverse portion 5, said washers being attached to the shaft 23 and thus prevent the drive shaft 23 from moving axially. Outside the transverse portion 5, one end of the drive shaft 23 is formed into a neck 21 for connecting to the rotary power movement.

The eccentric plate 25 is attached to the outer end of the drive shaft 23 and carries a journal or pin 28 disposed eccentrically in relation to the axis of the shaft 23. The eccentricity between the centre line 24 of the shaft 23 and the centre line of the journal 28 is denoted by e in Figure 1. A profiled roller body 31 of a diameter being nearly the same as the inner diameter of the inner tube 11 is mounted on the journal 28, its outer surface having ridges 33 running in planes oriented perpendicular to the axis of the journal 28 and being complementary to the helical groove or threads 12 of the inner cylinder 10.

The diameter of the profiled roller body 31 is selected such that its ridges 33 engage with the grooves 12 of the inner casing 11. A double eccentric plate 26 is attached to the outer end of the journal 28, said plate carrying a second journal or pin 29 diametrically opposite the first journal 28, and at the same distance e from the centre line 24, said journal 29 carrying a second profiled roller body 32 of the same diameter as and which is similar to the body 31. A stop washer 27 is attached to the outer end of the journal 29, so that the roller body 32 is axially retained between it and the double eccentric plate 26.

The profiled roller body 32 engages with the helical groove 12 of the inner casing 11 in a position diametrically opposite the engaging position of the roller body 31. The dimensions of the parts described are selected such that the profiled rollers 31 and 32 engage with a suitable force in the grooves 12 of the inner casing 11.

When the drive shaft 23 rotates, the profiled roller bodies 31 and 32 will follow or roll in the grooves of the inner casing 11 such that when the shaft 23 has turned one revolution in relation to the casing 11, the roller bodies will have displaced the inner casing a distance corresponding to one pitch of the helical groove 12. During this displacement, the inner cylinder 10 and the outer cylinder 1 will also have been displaced a pitch axially and linearly in relation to each other but without any mutual turning or rotation.

The described embodiment allows the selection of a very small pitch for the groove 12, down to one mm or less per revolution, and thus allows a very large gear reduction between the rotary movement and linear movement. This means, for example, that the neck 21 can normally be connected directly to the rotary driving power source.

By pretensioning the roller bodies 31 and 32 axially and/or radially in relation to each other, by means of adjusting washers or resilient elements, any play in the translating apparatus can be completely removed and very great positional accuracy obtained, which is necessary, e.g. for positioning movements in machine tools.

The ridges or threads 33 of the profiled roller bodies 31 and 32 are contained in planes perpendicular to the axes of the journals 28 and 29 and therefore also perpendicular to the axis of the inner cylindrical surface and centre line of the inner casing 11. The grooves 12 engaged by the ridges 33 of the rollers 31, 32 form an angle to the centre line of the inner casing 11, this angle depending upon the pitch of the helical groove, and there is the same angle between groove 12 and the ridges 33 of the rollers 31, 32. To obtain correct engagement, the ridges 33 of the profiled rollers 31, 32 must be given a suitable profile.

Three profiled roller bodies can be provided each with a long diameter in relation to the diameter of the inner casing 11 and small eccentricity. Such an embodiment is intimated in Figures 2 and 3 showing the outmost profiled roller body 40 of a driving system 20 with profiled roller bodies in the form of roller bearings, the outer ring being formed with ridges in plane parallel to the plane of the roller bearing. The bearing is mounted on an eccentric sleeve 41 on the shaft 23 such that the sleeve is fixed to the shaft and has a small eccentricity e between the centre lines of the shaft 23 and the centre line of the journal/eccentric sleeve. A small gap 44 thus occurs between the bearing 40 and the groove 12 in the inner sleeve 11. It is also apparent from Figure 2 that upwardly the crests of the ridges or threads on the roller 40 lie at the roots of the threads or grooves 12, whereas they are directly opposite the crests thereof on the diametrically opposite side. This is because of the condition, described several times above, that the grooves 12 have a helical pitch while the ridges 33 on the roller have no pitch at all.

Figure 3 is a cross section through the apparatus of Figure 2. In Figure 3 it can be seen the outer casing 2, inner casing 11 with helical grooves or threads 12, the bearing 40 with its centre 42, eccentric sleeve 41, drive shaft 23 with centre 24 and eccentricity e between centres 24 and 42. Lines 45 through both these centres for three different profiled roller bodies 40 are evenly angularly spaced at an angle of 120° around the shaft 23, as is apparent from Figure 3.

Figure 4 finally illustrates an embodiment of a roller body in the form of a roller bearing, in which the ridges 33 are formed on a separate ring 47 pressed or forced fit onto the outer ring of the bearing.

## Claims

1. A screw actuating mechanism adapted to provide a linear output movement in response to a rotary input movement comprising

— a drive shaft (23) rotatable in relation to and fixed against axial movement to a surrounding structure,

— an assembly of roller bodies (31, 32, 40) carried by said drive shaft, each roller body being rotatable about an axis (28, 29) parallel to said drive shaft,

— an elongate cylinder (10) having an internal thread (12) drivingly engaged with and concentric to said roller body assembly and movable axially in relation to said roller body assembly in response to rotary movement of said roller body assembly, and

— said roller bodies (31, 32, 40) being axially spaced along the length of said drive shaft (23), characterized in that each roller body (31, 32, 40) has multiple peripheral outwardly extending annular ridges (33), in that said multiple annular ridges (33) extend in planes oriented at right angles to said axis of rotation (28, 29) of said roller body, and in that the outer diameter of said multiple annular ridges is only slightly smaller than the inner diameter of the threads (12) of the elongate cylinder (10).

2. Actuator as claimed in claim 1, characterized by said roller bodies (31, 32, 40) being eccentrically journalled on said drive shaft (23) by means of intermediate eccentric sleeves (41), the sleeves having a hole to accommodate the drive shaft whereat the drive shaft (23) being cylindrical at least over the total axial length of the roller body assembly.

3. Actuator as claimed in claim 1 or 2, characterized in that the outer structure comprises an outer cylinder (1) concentric to the elongate cylinder (10) and enclosing same, said drive shaft (23) being rotatable in relation to the outer cylinder (1) but fixed against axial movement.

## Revendications

1. Dispositif pour convertir un mouvement rotatif en un mouvement rectiligne, comportant

— un arbre d'entraînement (23) rotatif par rapport à une structure enveloppante mais fixé contre mouvement axial,

— un ensemble de corps roulants (31, 32, 40) porté sur l'arbre d'entraînement, chaque corps roulant étant rotatif sur un axe (28, 29) parallèle à l'axe dudit arbre d'entraînement,

— un cylindre étendu en longueur (10) présentant un filetage intérieur (12) engrenant et disposé concentrique par rapport audit ensemble de corps roulants et deplaçable axialement par rapport audit ensemble en réponse à la rotation dudit ensemble de corps roulant, et

— lesdits corps roulants (31, 32, 40) étant espacés axialement suivant la longueuer dudit arbre d'entraînement, caractérisé en ce que chaque corps roulant (31, 32, 40) comporte des nervures (33) multiples, annulaires, s'etendant periphériquement en dehors, et en ce que lesdites nervures multiples annulaires (33) s'étendent dans des plans orientés perpendiculairement audit axe de rotation (28, 29) dudit corps roulante, et en ce que le diamètre extérieur desdites nervures multiples annulaires n'est qu'un peu plus petit que le diamètre intérieur des filetages (12) dudit cylindre étendu (10).

2. Dispositif selon la revendication 1, caractérisé en ce que lesdits corps roulants (31, 32, 40) sont logés excentriquement sur ledit arbre d'entraînement (23) au moyen de douilles excentriques intermédiares (41), ces douilles présentant une ouverture pour accommoder l'arbre d'entraînement, ledit arbre d'entraînement (23) étant cylindrique suivant au moins toute la longueur axiale de l'ensemble de corps roulants.

3. Dispositif selon la revendication 1 ou 2, caractérisé en ce que la structure extérieure comprend un cylindre extérieur (1) concentrique par rapport audit cylindre étendu (10) et enfermant ce dernier, ledit arbre d'entraînement (23) étant rotatif par rapport au cylindre extérieur (1) mais fixé contre mouvement axial.

## Patentansprüche

1. Vorrichtung zur Umwandlung einer drehenden in eine gradlinige Bewegung mit

— einer gegenüber einem umgebenden Bau drehbaren aber axial unverschiebbaren Antriebswelle (23),

— einer Anordnung mit auf der Antriebswelle aufgenommenen Rollkörpern (31, 32, 40), die jeweils um eine parallel zur Antriebswelle verlaufende Achse drehbar sind,

— einem länglichen Zylinder (10) mit einem Innengewinde (12) in Antriebseingriff mit und konzentrisch zu der Rollkörperanordnung und axial hierzu beweglich entsprechend der Drehbewegung der Rollkörperanordnung, und
— axialem Abstand der Rollenkörper (31, 32, 40) in Richtung der Antriebswelle (23), dadurch gekennzeichnet, daß die Rollkörper (31, 32, 40) jeweils mehrere sich peripher nach außen erstreckende ringförmige Grate (33) aufweisen, die in zur Drehachse (28, 29) der Rollkörper senkrechten Ebenen ausgerichtet sind und daß der Aussendurchmesser der ringförmigen Grate nur geringfügig kleiner ist als der Innendurchmesser des Gewindes (12) des länglichen Zylinders (10).

2. Vorrichtung nach Anspruch 1, dadurch gekennzeichnet, daß die Rollkörper (31, 32, 40) auf der genannten Antriebswelle (23) durch dazwischenliegende exzentrische Hülsen (41) exzentrisch gelagert sind, wobei die Hülsen eine auf die Antriebswelle abgestimmte Bohrung aufweisen und die Antriebswelle (23) wenigstens über die gesamte axiale Länge der Rollenkörper zylindrisch ist.

3. Vorrichtung nach Anspruch 1 oder 2, dadurch gekennzeichnet, daß die äußere Anordnung einen äußeren, zum länglichen Zylinder (10) konzentrischen Zylinder (1) umfaßt, der ersteren umschließt, wobei die Antriebswelle (23) gegenüber dem äußeren Zylinder (1) drehbar aber axial unverschiebbar ist.

FIG. 1

FIG. 2

FIG. 3

FIG. 4